# EUROPÄISCHE PATENTSCHRIFT

(11) **EP 0 454 663 B1**
(45) Veröffentlichungstag und Bekanntmachung des Hinweises auf die Patenterteilung: **16.06.1993**
(21) Anmeldenummer: 91890090.3
(22) Anmeldetag: 25.04.1991
(51) Int. Cl.: E01C 11/26, E01C 13/00, F24J 2/24, F24J 2/04

(54) **Wärmetauscher**
Heat exchanger
Echangeur de chaleur

(30) Priorität: 25.04.1990 AT 961/90
(43) Veröffentlichungstag der Anmeldung: 30.10.1991
(73) Patentinhaber: Solkav Solartechnik GmbH, A-3150 Wilhelmsburg (AT)
(72) Erfinder: Hakim-Elahi, Parviz c/o Solkav Solartechnik GmbH, A-3150 Wilhelmsburg (AT)
(74) Vertreter: Casati, Wilhelm, Dipl.-Ing.

(56) Entgegenhaltungen:
- EP-A- 0 210 285
- EP-A- 0 216 344
- DE-A- 3 101 913
- DE-A- 3 231 231
- FR-A- 2 186 574
- FR-A- 2 574 911
- GB-A- 2 019 931

## Beschreibung

Die Erfindung betrifft einen Wärmetauscher mit mehreren Strömungskanälen, die gegebenenfalls durch Stege miteinander verbunden sind, wie z.B. in der DE-A-3 101 913 beschrieben.

Aufgabe der Erfindung ist es, einen Wärmetauscher so zu gestalten, daß es ermöglicht wird, Flächen, die bisnun ausschließlich zur Unterbringung des Wärmetauschers in Form eines Solarkollektors, Absorbers für Wärmepumpen oder Absorbers für Kunsteislaufflächen gedient haben, und für ein Begehen nicht vorgesehen waren, gleichzeitig auch für andere Zwecke, z.B. als rutschfeste Schwimmbadumrandung, als Spielfläche (Tennis, Volleyball, Federball etc) oder als Durchgangsfläche (Gehweg) und Liegefläche, allgemein als Sport- bzw. Erholungsfläche zu benutzen, ohne daß es nach dem Installieren des Wärmetauschers noch besonderer Abdeckungsarbeiten bedarf. Es soll damit, unterschiedlich zu den bisnun nur als Heiz- bzw. Kühlelemente verwendeten Vorrichtungen ein Wärmetauscher so gestaltet werden, daß eine Begeh- bzw. Bespielbarkeit des vom Wärmetauscher eingenommenen Platzes ermöglicht wird. Hiezu schlägt die Erfindung vor, die Strömungskanäle in durch ein Bindemittel, z.B. Polyurethankleber, miteinander verbundenen Körnchen aus gummiartigem Material einzubetten. Durch die Einbettung der Strömungskanäle sind diese auch nach unten mit Körnchen aus gummiartigem Material so weit umgeben, daß ein Wärmeaustausch zwischen dem in den Strömungskanälen befindlichen Medium und der Unterlage, auf welcher der Wärmetauscher verlegt wird, behindert wird. Durch die oberseitige Abdeckung mit den Körnchen wird eine Nutzfläche geschaffen. Diese Fläche ist dabei begeh- und auch bespielbar, ohne daß dabei die Strömungskanäle einer Verformung ausgesetzt wären. Als Bindemittel zwischen den Gummigranulaten und den Strömungskanälen kann allgemein ein elastisch bleibendes Bindemittel, z.B. auf Polyurethanbasis, verwendet werden. Dadurch, daß der Wärmetauscher an Ort und Stelle fix verlegt wird, kann die Oberfläche ganzjährig mehrfach genutzt werden.

In weiterer Gestaltung der Erfindung kann vorgesehen werden, daß die Strömungskanäle aus dem gleichen Material wie die Körnchen, in welche sie eingebettet sind, bestehen. Durch Benutzung der gleichen Materialien treten auch bei höheren Temperaturschwankungen zwischen den einzelnen Bestandteilen des Wärmetauschers keine Dehnungsdifferenzen auf.

Besonders zweckmäßig ist es, wenn die Körnchen aus EPDM-Kunststoff bestehen. Bevorzugt können die Körnchen dabei verschieden gefärbt sein. Dadurch können optisch homogen gefärbte oder auch künstlerisch gestaltete Oberflächen (mit dekorativem Charakter) erzielt werden, wodurch der Wärmetauscher auch als Durchgangs- oder Liegefläche oder als Ballspielfläche genutzt werden kann.

In weiterer Ausgestaltung der Erfindung kann vorgesehen werden, daß die Strömungskanäle außerhalb der Mittenebene zwischen den freien Oberflächen der Körnchenschicht angeordnet sind, in der die Strömungskanäle eingebettet sind. Durch diese Gestaltung werden unterschiedliche Isoliereffekte oder, besser gesagt, Wärmedurchgänge durch das Material, das die Strömungskanäle umgibt, erreicht.

Die Strömungskanäle können in Weiterbildung der Erfindung an eine Wärmepumpe und/oder an einen zu heizenden Kreislauf angeschlossen sein. Ist die Fläche an eine Wärmepumpe angeschlossen, so kann sie als Absorber zu Heizzwecken herangezogen werden.

Selbstredend können Wärmetauscher in erfindungsgemäßer Gestaltung auch als Solarkollektoren Verwendung finden, beispielsweise kann hiebei über den Wärmetauscher im Sommer ein Freibad beheizt werden.

Eine Gestaltung des Wärmetauschers, bei der in an sich bekannter Weise mehrere Strömungskanäle zu Strömungskreisen zusammengefaßt sind und die Strömungskreise alternativ mit Wärmeträgermedium, insbesondere Wasser oder mit Kältemittel, z.B. Sole, beschickbar sind, erlaubt es, die gleiche Fläche im Sommer als Liegewiese, Spielplatz od.dgl. zu verwenden, gegebenenfalls bei dekorativer Gestaltung der Oberfläche, und im Winter auf der gleichen Fläche dann ohne Umbauten Eis für Zwecke des Eislaufsportes zu erzeugen.

Weiters ist Gegenstand der Erfindung ein Verfahren zur Herstellung eines Wärmetauschers, das sich erfindungsgemäß dadurch auszeichnet, daß auf eine Unterlage, z.B. einen natürlich gewachsenen Boden oder eine Schicht aus EPDM-Kunststoffgranulat, ein Gemisch aus dem Kleber und einem Kunststoff, z.B. EPDM-Kunststoffgranulat oder Körnchen aus gummiartigem Material in pastöser Form aufgetragen wird, daß in die aufgetragene, noch in pastösem Zustand befindliche Schicht die Strömungskanäle bzw. die aus den Strömungskanälen und den sie verbindenden Stegen gebildete Matte eingedrückt wird und dadurch eingebettet wird und die Einbettung gegebenenfalls durch Auftragen eines pastösen Gemisches aus dem Kleber und Kunststoff, z.B. EPDM-Kunststoffgranulat oder Körnchen aus gummiartigem Material vervollständigt wird. Auf diese Weise kann in wenigen, einfachen Schritten eine einwandfreie Wärmetauscherfläche erzielt werden, die für die vorstehend erwähnten Zwecke benutzt werden kann. Um eine besonders feste Fläche zu erzielen, kann auch so vorgegangen werden, daß das Gemisch aus Klebstoff mit den gummiartigen Teilchen vor und/oder nach dem Einbetten der Rohre verdichtet wird.

Die Erfindung wird nachstehend anhand der Zeichnung beispielsweise erläutert Es zeigen,
Fig. 1 eine Draufsicht auf die erfindungsgemäß verwendete Rohranordnung samt Anschluß, und
Fig. 2 einen Schnitt entlang der Linie II-II in Fig. 1, wobei jedoch die mit Gummigranulat und Bindemittel geschaffene, in Fig. 1 nicht dargestellte Einbettung der Rohre ersichtlich ist.

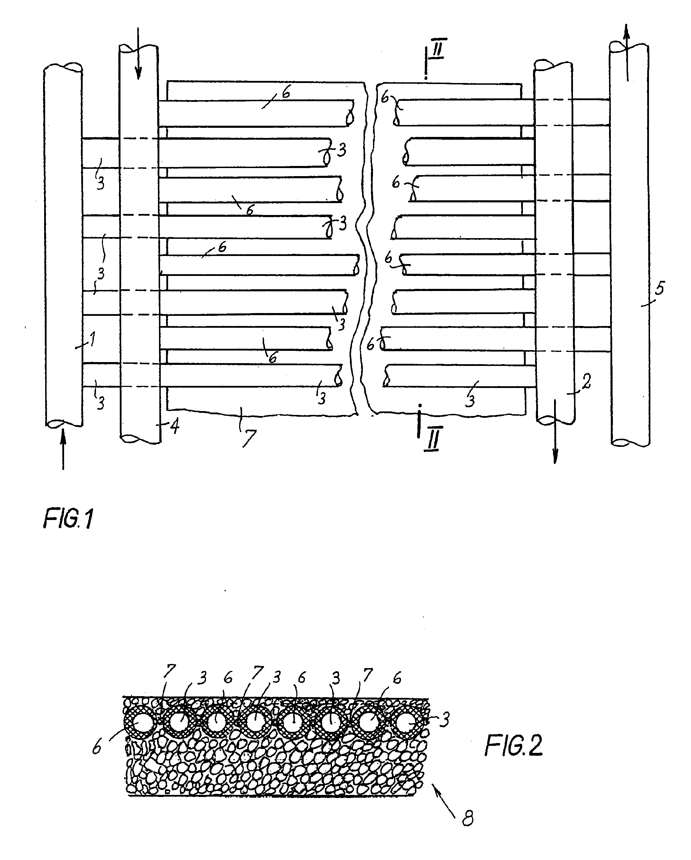

In der Zeichnung ist mit 1 die Zuleitung für das Wärmeträgermedium zur Gewinnung von Wärmeenergie und mit 2 die Ableitung für das durch Sonnenenergie erwärmte Wärmeträgermedium bezeichnet, wobei das Wärmeträgermedium durch von Schläuchen oder Rohren gebildete Strömungskanäle 3 fließt. 4 ist die Zuleitung für das Kältemittel, z.B. Sole und 5 die Ableitung für dasselbe, wobei die beiden Leitungen 4, 5 gleichfalls durch Schläuche oder Rohre gebildete Strömungskanäle 6 miteinander verbunden sind. Wie aus Fig. 2 ersichtlich, stehen die die Strömungskanäle 3, 6 bildenden Schläuche durch parallel zur Längsachse verlaufende, außen angebrachte Stege 7 mechanisch in Verbindung, so daß sich ein mattenförmiger und frostsicherer Wärmetauscher 8 ergibt. Die Stege 7 können dabei tangential von den Rohren abgehen, jedoch auch radial, insbes. in der Mittenebene der Rohre angeordnet werden. Die Rohre sind, wie Fig. 2 erkennen läßt, in einer aus Gummigranulat und Bindemittel gebildeten Ummantelung eingebettet. Die Leitungen 1 und 2 sind an einem Wärmekreislauf zur Bereitung von Warmwasser, z.B. Wasser eines Schwimmbades, angeschlossen, wobei in diesem Fall das Schwimmbadwasser zur Erwärmung direkt, also ohne Zwischenwärmeträger, durch den Wärmetauscher geschickt werden kann. Die Leitungen 4 und 5 stehen mit dem Kältekreislauf einer Kältemaschine oder Wärmepumpe in Verbindung und werden von letzterer mit kaltem Kältemittel, z.B. unterkühlter Sole, beschickt. Im Sommer wird dabei nur der Wärmekreislauf über die Leitungen 1 und 2 betrieben, wobei der Kältekreislauf stillgelegt ist, im Winter oder in der Heizperiode der Wärmepumpe hingegen nur der Kältekreislauf über die Leitungen 4 und 5, wobei dann der Wärmekreislauf stillgelegt ist. Der Innendurchmesser der Schläuche bzw. Rohre 3 kann 7 mm und die Wandstärke 1,6 mm betragen. Die Schläuche bzw. Rohre können gleich wie die Rohre 3 bemessen sein, sie können jedoch auch einen geringeren Innendurchmesser von z.B. 5,2 mm bei einer etwas größeren Wandstärke von z.B. 1,7 mm aufweisen.

Durch die Benützung der gleichen Materialien, z.B. EPDM für die Strömungskanäle, Gummigranulatisolierung, z.B. EPDM nach unten, sowie färbig gestaltete Gummigranulatbeschichtung, z.B. EPDM der Oberfläche treten keine Dehnungsdifferenzen bei hohen Temperaturschwankungen zwischen den einzelnen Komponenten auf.

## Patentansprüche

1. Wärmetauscher mit mehreren Strömungskanälen (3,6), die gegebenenfalls durch Stege (7) miteinander verbunden sind, dadurch gekennzeichnet, daß die Strömungskanäle (3,6) in durch ein Bindemittel, z.B. Polyurethankleber, miteinander verbundenen Körnchen aus gummiartigem Material oder EPDM-Kunststoff eingebettet sind.

2. Wärmetauscher nach Anspruch 1, dadurch gekennzeichnet, daß die Strömungskanäle aus dem gleichen Material wie die Körnchen, in welche sie eingebettet sind, bestehen.

3. Wärmetauscher nach Anspruch 1 oder 2, dadurch gekennzeichnet, daß die Körnchen aus EPDM-Kunststoff bestehen und bevorzugt verschieden gefärbt sind.

4. Wärmetauscher nach einem der Ansprüche 1 bis 3, dadurch gekennzeichnet, daß die Strömungskanäle außerhalb der Mittenebene zwischen den freien Oberflächen der Körnchenschicht angeordnet sind, in der die Strömungskanäle eingebettet sind (Fig. 2).

5. Wärmetauscher nach einem der Ansprüche 1 bis 4, dadurch gekennzeichnet, daß die Strömungskanäle an eine Wärmepumpe und/oder an einen zu heizenden Kreislauf angeschlossen sind.

6. Wärmetauscher nach einem der Ansprüche 1 bis 5, dadurch gekennzeichnet, daß in an sich bekannter Weise mehrere Strömungskanäle zu Strömungskreisen zusammengefaßt sind und daß die Strömungskreise alternativ mit Wärmeträgermedium, insbesondere Wasser oder mit Kältemittel, z.B. Sole, beschickbar sind.

7. Verfahren zur Herstellung eines Wärmetauschers nach einem der Ansprüche 1 bis 6, dadurch gekennzeichnet, daß auf eine Unterlage, z.B. einen natürlich gewachsenen Boden oder eine Schicht aus EPDM-Kunststoffgranulat, ein Gemisch aus dem Kleber und einem Kunststoff, z.B. EPDM-Kunststoffgranulat oder Körnchen aus gummiartigem Material in poröser Form aufgetragen wird, daß in die aufgetragene, noch in pastösem Zustand befindliche Schicht die Strömungskanäle bzw. die aus den Strömungskanälen und den sie verbindenden Stegen gebildete Matte eingedrückt wird und dadurch eingebettet wird, und die Einbettung gegebenenfalls durch Auftragen eines pastösen Gemisches aus dem Kleber und Kunststoff, z.B. EPDM-Kunststoffgranulat oder Körnchen aus gummiartigem Material vervollständigt wird.

8. Verfahren zur Herstellung eines Wärmetauschers nach Anspruch 7, dadurch gekennzeichnet, daß das Gemisch aus Klebstoff mit den gummiartigen Teilchen vor und/oder nach dem Einbetten der Rohre verdichtet wird.

## Claims

1. Heat exchanger with a plurality of flow passages (3, 6), which are optionally connected together by webs (7), characterised in that the flow passages (3, 6) are embedded in granules of rubber-like material or EPDM plastic material which are connected together by a bonding agent, e.g. polyurethane adhesive.

2. Heat exchanger as claimed in Claim 1, characterised in that the flow passages consist of the same material as the granules in which they are embedded.

3. Heat exchanger as claimed in Claim 1 or 2, characterised in that the granules consist of EPDM plastic material and are preferably differently coloured.

4. Heat exchanger as claimed in one of Claims 1 to 3, characterised in that the flow passages are disposed outside the central plane between the free surfaces of the granule layer in which the flow passages are embedded (Fig. 2).

5. Heat exchanger as claimed in one of Claims 1 to 4, characterised in that the flow passages are connected to a heat pump and/or to a circuit which is to be heated.

6. Heat exchanger as claimed in one of Claims 1 to 5, characterised in that a plurality of flow passages are combined in a manner known per se into flow circuits and that the flow circuits can be fed alternatively with heat carrier medium, particularly water, or with cooling medium, e.g. salt water.

7. Method of manufacturing a heat exchanger as claimed in one of Claims 1 to 6, characterised in that a mixture of the adhesive and a plastic material, e.g. EPDM plastic granulate or granules of rubber-like material is applied in porous form to a support, e.g. a naturally built-up base or a layer of EPDM plastic granulate, that the flow passages for the mat constituted by the flow passages and the webs connecting them are pressed into the applied layer, which is still in the pasty state, and are thereby embedded and the embedding is optionally completed by applying a pasty mixture of the adhesive and plastics material, e.g. EPDM plastic granulate or granules of rubber-like material.

8. Method of manufacturing a heat exchanger as claimed in Claim 7, characterised in that the mixture of adhesive with the rubber-like particles is compressed before and/or after embedding the tubes.

## Revendications

1. Echangeur de chaleur pourvu de plusieurs canaux d'écoulement (3, 6), qui peuvent éventuellement être reliés par des entretoises (7), caractérisé en ce que les canaux d'écoulement (3, 6) sont noyés dans des granules en matériau de type caoutchouteux ou en matériau de synthèse EPDM, liés entre eux par un liant, par exemple par un adhésif à base de polyuréthane.

2. Echangeur de chaleur selon la revendication 1, caractérisé en ce que les canaux d'écoulement sont constitués dans le même matériau que les granules dans lesquels ils sont noyés.

3. Echangeur de chaleur selon la revendication 1 ou 2, caractérisé en ce que les granules sont constitués en EPDM et sont, de préférence, de différentes couleurs.

4. Echangeur de chaleur selon l'une des revendications 1 à 3, caractérisé en ce que les canaux d'écoulement sont disposés en dehors du plan médian entre les surfaces libres de la couche de granules, dans laquelle les canaux d'écoulement sont noyés (fig. 2).

5. Echangeur de chaleur selon l'une des revendications 1 à 4, caractérisé en ce que les canaux d'écoulement sont raccordés à une pompe à chaleur et/ou à un circuit devant être chauffé.

6. Echangeur de chaleur selon l'une des revendications 1 à 5, caractérisé en ce que, de façon connue en soi, plusieurs canaux d'écoulement sont regroupés en circuits d'écoulement et en ce que les circuits d'écoulement peuvent être alimentés de façon alternative en milieu caloporteur, en particulier en eau, ou en milieu frigoporteur, par exemple en eau salée.

7. Procédé de fabrication d'un échangeur de chaleur selon l'une des revendications 1 à 6, caractérisé en ce que, sur une base, comme par exemple sur un sol naturel ou sur une couche de granulés d'EPDM, est étendu un mélange d'adhésif et d'une matière synthétique, comme par exemple des granulés d'EPDM ou des granules en matière caoutchouteuse poreuse, en ce que les canaux d'écoulement, ou le réseau que forment les canaux d'écoulement et les entretoises les reliant, sont enfoncés dans la couche appliquée se trouvant encore à l'état de pâte, ce qui a pour conséquence de les y noyer, et en ce que l'encastrement peut être complété en rapportant un mélange à l'état de pâte composé d'adhésif et de matière synthétique, comme par exemple des granulés d'EPDM ou des granules de matière synthétique.

8. Procédé de fabrication d'un échangeur de chaleur selon la revendication 7, caractérisé en ce que le mélange de l'adhésif et des parties caoutchouteuses est comprimé avant et/ou après l'encastrement des tuyaux.
